# EUROPÄISCHE PATENTSCHRIFT

(11) **EP 1 577 664 B1**
(45) Veröffentlichungstag und Bekanntmachung des Hinweises auf die Patenterteilung: **11.09.2019**
(21) Anmeldenummer: 05003346.3
(22) Anmeldetag: 17.02.2005
(51) Int. Cl.: G01N 21/90, G01N 21/88

(54) **INSPEKTIONSVORRICHTUNG FÜR FLASCHEN ODER DERGLEICHEN BEHÄLTER**
INSPECTION APPARATUS FOR BOTTLES OR SIMILAR CONTAINERS
APPAREIL POUR L'INSPECTION DE BOUTEILLES OU DE RÉCIPIENTS PAREILS

(30) Priorität: 20.03.2004 DE 102004013774
(43) Veröffentlichungstag der Anmeldung: 21.09.2005
(73) Patentinhaber: KHS GmbH, 44143 Dortmund (DE)
(72) Erfinder: HARTIG, Wolfgang, 53359 Rheinbach (DE)

(56) Entgegenhaltungen:
- EP-A- 0 669 528
- DE-A1- 10 062 784
- DE-A1- 10 140 009
- US-A- 4 025 201
- US-A- 5 729 340

## Beschreibung

Die Erfindung bezieht sich auf eine Inspektionsvorrichtung für Flaschen oder dgl. Behälter aus Glas oder einem transluzentem, d.h. durchscheinendem oder durchsichtigem Material gemäß Oberbegriff Patentanspruch 1.

Inspektionsvorrichtungen für Flaschen oder dgl. aus Glas oder einem anderen transluzentem Material, beispielsweise aus Kunststoff (z. B. PET) sind in verschiedensten Ausführungen bekannt und dienen zur optischen Überprüfung der Behälter beispielsweise vor dem Füllen mit einem flüssigen Füllgut.

Bei derartigen Inspektionsvorrichtungen werden die Behälter zur Inspektion insbesondere auch an ihren Seitenwänden an einer Inspektionsposition vor einem beleuchteten Hintergrund, d.h. vor einem Leuchtschirm positioniert und mit einer Kamera abgebildet. Die so gewonnenen Bilder werden in einem Bildauswertverfahren nach Fehlern und/oder Verschmutzungen untersucht. Grundsätzliche Probleme ergeben sich bei dieser optischen Inspektion durch die sogenannte Randflächenverdickung, d.h. dadurch, dass in der jeweiligen Abbildung die Randbereiche der Behälter abgedunkelt wiedergegeben sind, sodass dort vorhandene Fehler und/oder Verschmutzungen nicht mit Sicherheit erkannt werden. Um dieses Problem zu lösen, ist es üblich, die aufrecht stehenden Behälter oder Flaschen während der Inspektion um ihre Hoch- oder Behälterachse zu drehen und dabei mehrfach mit einer oder mehreren Kameras zu erfassen.

Bekannt ist auch eine Inspektionsvorrichtung dieser Art, bei der von dem jeweiligen Behälter zwei parallele Bilder aus unterschiedlichen Aufnahme- oder Bildrichtungen erzeugt werden. Im Strahlengang zwischen der Inspektionsposition bzw. dem Behälter und der Kamera sind für jedes Bild zusätzliche fokussierende optische Elemente vorgesehen, die wegen des großen Öffnungswinkels, unter dem die Abbildungen erfolgen, als Fresnellinsen ausgeführt sind. Diese zusätzlichen optischen Elemente erhöhen nicht nur die Kosten, sondern durch die Struktur der Fresnellinsen ist auch die Bildqualität derart beeinträchtigt, dass für eine ausreichende Inspektionssicherheit während der Inspektion auch noch ein Drehen der Behälter um ihre Hochachse und/oder das mehrfache Abbilden unter unterschiedlichen Blickwinkeln vorgesehen ist, wobei diese unterschiedlichen Blickwinkel auch solche sein können, welche von der Horizontalen abweichen.

Ein möglicher Weg zum Verzicht auf die zusätzlichen, focusierenden optischen Elemente wird durch die US 5,729,340 vorgestellt, Dabei schlägt diese Schrift u.a. eine Vorrichtung vor, bei welcher durch eine mehrfache Faltung des optischen Strahlenganges eine möglichst große optische Länge zwischen dem Objektiv und dem zu inspizierenden Objekt erzielt wird. Weiterhin schlägt die US 5,729,340 vor, die notwendige elektronische Kamera oberhalb der Behältertransportebene anzuordnen. Durch diese Vorgehensweise gelingt es zwar, die optische Länge zwischen Objekt und Objektiv in einem gewissen Maße zu verlängern, doch ist die dadurch erzielbare Verbesserung der Aufnahmequalität nicht für alle Aufgabenstellungen ausreichend.

Eine weitere Vorrichtung wurde durch die EP 0 669 528 A1 bekannt. Diese Schrift zeigt eine Vorrichtung, bei welcher zur Vergrößerung der optischen Länge, der optische Strahlengang durch Spiegel mehrfach zick-zack-förmig umgelenkt wird, wobei darüber hinaus der optische Strahlengang auf einem Spiegelelement sogar mehrfach umgelenkt wird. Nachteilig an einer Vorrichtung entsprechend der EP 0 669 528 A1 ist, dass die zahlreichen Umlenkungen des optischen Strahlenganges die Abbildungsqualität negativ beeinflussen können.

DE 101 40 009 A1 offenbart ein Verfahren und eine Vorrichtung zur Inspektion gefüllter und verschlossener Flaschen.

Aufgabe der Erfindung ist es, eine Inspektionsvorrichtung aufzuzeigen, die ohne ein Drehen der Behälter und mit nur einer einzigen Kamera eine zuverlässige Inspektion ermöglicht. Zur Lösung dieser Aufgabe ist eine Inspektionsvorrichtung entsprechend dem Patentanspruch 1 ausgebildet.

Mit der erfindungsgemäßen Inspektionsvorrichtung ist eine vollständige Inspektion von Behältern an ihren Seitenwänden mit nur einer einzigen Kamera möglich, und zwar ohne Drehung der Behälter um ihre Hochachse während der Inspektion, da durch die Erfassung des an der Inspektionsposition angeordneten Behälters in wenigstens zwei unterschiedlichen Aufnahme- oder Bildrichtungen mehr als 180° des Umfangs des jeweiligen Behälters abgebildet und mit einer einzigen Aufnahme ausgewertet werden können. Probleme, die sich durch die Randflächenverdickung ergeben, sind somit ohne ein Drehen der Behälter vermieden.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in schematischer Darstellung und in einem Vertikalschnitt die Elemente einer Behälter-Inspektionsvorrichtung gemäß der Erfindung;
- Fig. 2: in schematischer Darstellung eine Draufsicht auf die Vorrichtung der Figur 1.

Die in den Figuren allgemein mit 1 bezeichnete Inspektionsvorrichtung dient zur optischen Inspektion von Behältern aus Glas oder einem anderen transluzentem Material, nämlich der Flaschen 2 z.B. nach dem Reinigen oder Waschen und vor einem erneuten Befüllen mit einem flüssigen Füllgut. Die Vorrichtung 1 ist demnach beispielsweise Bestandteil einer Produktions-Linie, und zwar zwischen einer Flaschenwasch- oder Reinigungsmaschine oder Rinser und einer Füllmaschine.

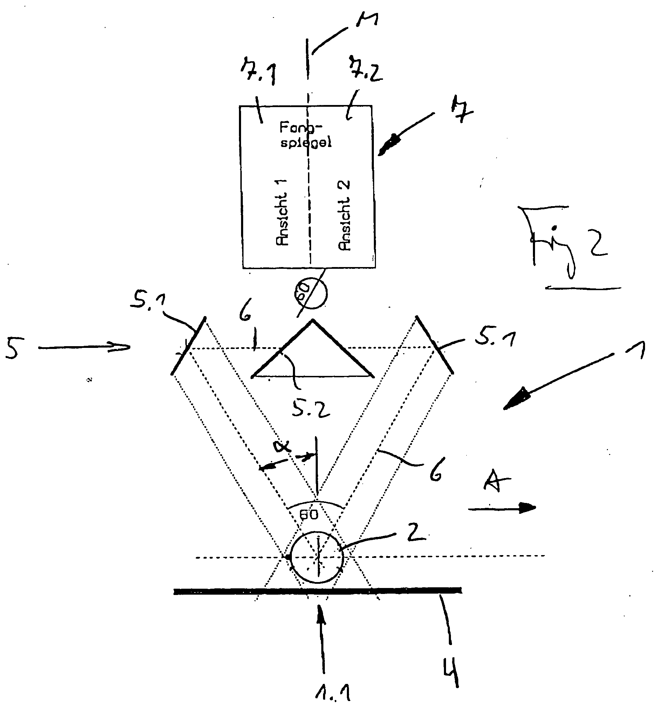

Die Inspektionsvorrichtung 1, die auch als Linearinspektor bezeichnet werden kann und an der die Flaschen 2 aufrecht stehend auf einem Transporteur 3 in einer horizontalen Transportrichtung vorbeibewegt werden (Pfeil A der Figur 2), umfasst u. a. einen vertikalen Leuchtschirm 4, der an einer Seite des Transporteurs 3 parallel zur Transportrichtung A angeordnet ist und im aktivierten Zustand einen beleuchteten Hintergrund bildet, an welchem die Flaschen vorbeibewegt werden.

Die Vorrichtung 1 umfasst weiterhin eine Spiegelanordnung 5, die dem Leuchtschirm 4 bzw. einer Inspektionsposition senkrecht zur Förderrichtung A in horizontaler Richtung gegenüberliegend vorgesehen ist und aus mehreren Spiegeln, d. h. bei der dargestellten Ausführungsform aus insgesamt vier Spiegeln besteht. Die Spiegelanordnung 5 ist insbesondere auch bezüglich der Ausbildung und Anordnung ihrer Spiegel symmetrisch zu einer vertikalen Mittelebene M ausgebildet, die senkrecht zur Transportrichtung A und auch senkrecht zur Ebene des Leuchtschirmes 4 orientiert ist und an der sich auch die Inspektionsposition 1.1 befindet.

Die Spiegelanordnung 5 ist so ausgebildet, dass mit ihrer Hilfe jede an der Inspektionsposition 1.1 vorbeibewegte Flasche 2 unter zwei unterschiedlichen Bild- oder Abbildungsrichtungen erfasst wird, und zwar jeweils über ihre gesamte Höhe, wobei diese Abbildungsrichtungen mit der Mittelebene M jeweils einen Winkel α < 90° einschließen, der sich zu der dem Leuchtschirm 4 abgewandten Seite hin öffnet, wie dies mit dem Strahl 6 angedeutet ist. Bei der dargestellten Ausführungsform beträgt der Winkel α 30°.

Die Spiegelanordnung 5 besitzt hierfür auf beiden Seiten der Mittelebene M und von dieser beanstandet zwei erste Umlenkspiegel 5.1, die bei der dargestellten Ausführungsform mit ihren Spiegelebenen in vertikaler Richtung orientiert sind und in vertikaler Richtung eine Höhe aufweisen, die zumindest etwas größer ist als die maximale Höhe der zu inspizierenden Flaschen 2. Die Breite der Umlenkspiegel 5.1 in horizontaler Richtung ist größer als der Durchmesser dieser Flaschen. Die Umlenkspiegel 5.1 sind weiterhin so orientiert, dass ein horizontaler Strahl 6, der von der in der Mittelebene M befindlichen Hochachse einer Flasche 2 ausgeht, an dem betreffenden Umlenkspiegel 5.1 in Richtung zu der Mittelebene M hin reflektiert wird, und zwar in einer Achsrichtung senkrecht zu dieser Mittelebene M.

Die Spiegelanordnung 5 besitzt weiterhin zwei zweite Umlenkspiegel 5.2, die wiederum beidseitig von der Mittelebene M angeordnet sind und deren Höhe und Breite ebenfalls größer ist als die Höhe bzw. der Durchmesser der Flaschen 2. Die beiden Umlenkspiegel 5.2 sind jeweils so orientiert, dass der auf diese auftreffende Lichtstrahl 6 in horizontaler Richtung und parallel zur Mittelebene M, aber von dieser beanstandet umgelenkt wird, und zwar auf einen Fangspiegel 7. Dieser liegt mit einer Mittelachse in der Mittelebene M und weist von dem Leuchtschirm 4 einen größeren Abstand auf als die Spiegelanordnung 5. Der Fangspiegel 7 bildet zwei Bereiche, und zwar bei der Darstellung der Figur 2 den Bereich 7.1 links von der Mittelebene M für das von dem Umlenkspiegel 5.2 links von der Mittelebene reflektierte Bild und den rechten Bereich 7.2 für das von dem Umlenkspiegel 5.2 rechts von der Mittelebene M reflektierte Bild.

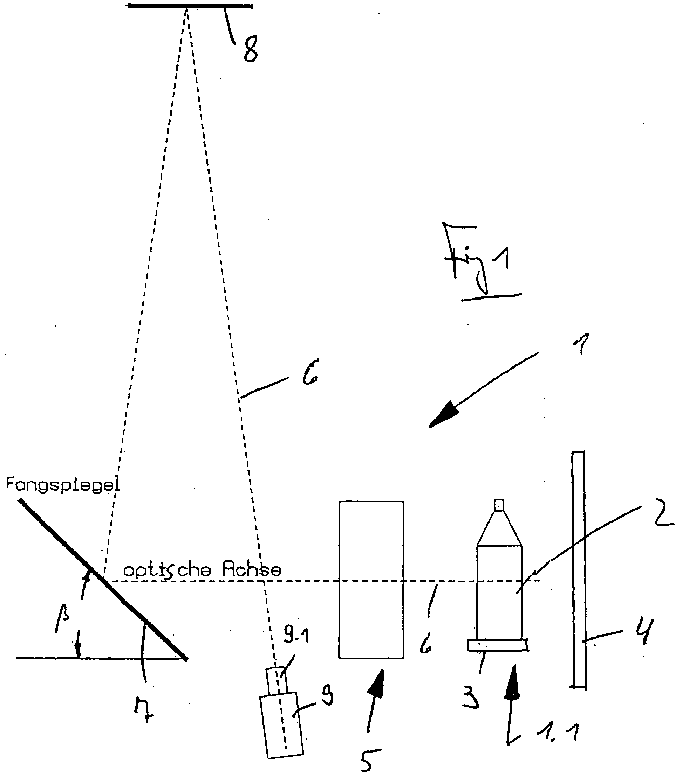

Der Fangspiegel 7 ist gegenüber der Horizontalen geneigt (Winkel β der Figur 1) und zwar derart, dass die Schnittlinie der Spiegelfläche des Fangspiegels 7 mit der Horizontalen parallel zur Ebene des Leuchtschirmes 4 und damit auch parallel zur Transportrichtung A liegt. In vertikaler Richtung oberhalb des Fangspiegels 7 ist ein Umlenkspiegel 8 derart angeordnet, dass beide von den Bereichen 7.1 und 7.2 des Fangspiegels 7 zunächst vertikal nach oben reflektierten Bilder an diesem Umlenkspiegel 8 wieder nach unten reflektiert werden, und zwar an eine elektronische Kamera 9, die bzw. deren Optik 9.1 sich unterhalb der Spiegelanordnung 5 und des Fangspiegels 7 befindet, und zwar im Bereich zwischen den beiden Umlenkspiegeln 5.2 und dem Fangspiegel 7, sodass sich bei reduziertem Bauvolumen der Vorrichtung 1 entsprechend dem Strahl 6 ein gefalteter Strahlengang mit einem großen optischen Abstand zwischen Objekt, nämlich der jeweiligen Flasche 2 an der Inspektionsposition 1.1 und dem Objektiv 9.1 der Kamera 9 ergibt. Die Brennweite des Objektives 9.1 ist weiterhin so gewählt, dass unter Berücksichtigung dieses optischen Abstandes für beide Abbildungen der Flasche 2 eine im Wesentlichen parallele Ausrichtung der Strahlen im Strahlengang zwischen der Flasche 2 und dem Objektiv 9.1 erreicht ist und insbesondere auch zusätzlich zu den Spiegeln der Spiegelanordnung 5, dem Fangspiegel 7 und dem Umlenkspiegel 8 oder diesen Spiegeln entsprechenden optischen Komponenten für eine Strahlumlenkung keine zusätzliche Optik zum Fokussieren und/oder Formen der Strahlen notwendig ist. Der bei der dargestellten Ausführungsform rechteckförmig ausgebildete Fangspiegel 7 ist derart angeordnet bzw. justiert, dass ein auf die Mitte des Umlenkspiegels 5.2 auftreffender Lichtstrahl 6 von diesem Umlenkspiegel auf die Mitte des Bereichs 7.1 oder 7.2 des Fangspiegels reflektiert wird und von dort dann auf den zusätzlichen Umlenkspiegel 8, der wiederum für beide Bilder einen Bereich aufweist, sodass beide Bilder von der Kamera 9 nebeneinander dargestellt werden.

Bei der dargestellten Ausführungsform beträgt der optische Abstand zwischen der jeweiligen Flasche 2 und dem Objektiv 9.1 etwa 2500 mm. Die Brennweite des Objektivs 9.1 liegt in der Größenordnung von 35 mm.

In einer weiteren Ausgestaltung der vorliegenden Erfindung ist vorgesehen, dass zur verbesserten Inspektion der Flasche 2 nicht nur zwei, sondern mindestens drei (Teil)-Bilder erzeugt und zu der einen Kamera geleitet werden, wo diese mindestens drei (Teil)-Bilder wie ein Gesamtbild erscheinen und als ein solches ausgewertet werden.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird.

In Rahmen der vorliegenden Anmeldung wurde zur Verdeutlichung der Erfindung als Ausführungsbeispiel ein sogenannter Linearinspektor herangezogen. Die Anwendung der vorgestellten Inspektionsvorrichtung an einer als Rundläufer ausgebildeten Inspektionsmaschine führt nicht dazu, dass der Rahmen der vorliegenden Erfindung verlassen wird.

### Bezugszeichenliste

- 1: Inspektionsvorrichtung
- 1.1: Inspektionsposition
- 2: Behälter oder Flasche
- 3: Transporteur
- 4: Leuchtschirm
- 5: Spiegelanordnung
- 5.1, 5.2: Umlenkspiegel
- 6: Lichtstrahl
- 7: Fangspiegel
- 8: zusätzlicher Umlenkspiegel
- 9: Kamera
- 9.1: Objektiv der Kamera 9

## Patentansprüche

1. Inspektionsvorrichtung für eine optische Inspektion von Flaschen oder dgl. Behälter (2) aus Glas oder einem transluzentem Material, mit wenigstens einer an einer Seite eines Transporteurs (3) für die Behälter (2) angeordneten Beleuchtungseinrichtung (4), mit einer elektronischen Kamera (9) zur Abbildung des vor der Beleuchtungseinheit (4) an einer Inspektionsposition (1.1) positionierten Behälters (2) sowie mit einer optischen Anordnung (5, 7, 8) im Strahlengang zwischen dem Behälter und einem Objektiv (9.1) der Kamera (9) zur Erzeugung wenigstens zweier Bilder von dem jeweiligen Behälter aus wenigstens zwei unterschiedlichen Aufnahme- oder Bildrichtungen, wobei der optische Abstand zwischen dem an der Inspektionsposition (1.1) befindlichen Behälter (2) und einem Objektiv (9.1) der Kamera für jedes Bild unter Berücksichtigung der Brennweite des Objektivs (9.1) und die optische Anordnung (5, 7, 8) so gewählt sind, dass für jedes Bild im Strahlengang zwischen dem Behälter (2) und dem Objektiv (9.1) eine im Wesentlichen parallele Ausrichtung der Strahlen erreicht ist, wobei die optische Anordnung (5, 7, 8) eine erste Spiegelanordnung (5) umfasst, die die beiden Einzelbilder aus den unterschiedlichen Aufnahme- und Bildrichtungen in eine gemeinsame Ebene umlenkt, wobei diese gemeinsame Ebene eine optische Ebene eines für beide Bilder gemeinsamen Fangspiegels (7) einer weiteren Spiegelanordnung (7, 8) ist, die im Strahlenweg zwischen der ersten Spiegelanordnung (5) und dem Kameraobjektiv (9.1) vorgesehen ist, **dadurch gekennzeichnet, dass** diese weitere Spiegelanordnung (7, 8) einen Umlenkspiegel (8) umfasst, der derart oberhalb des Fangspiegels (7) angeordnet ist, dass beide von Bereichen (7.1, 7.2) des Fangspiegels (7) zunächst vertikal nach oben reflektierten Bilder an diesem Umlenkspiegel (8) wieder nach unten reflektiert werden, und zwar an die Kamera (9), die mit der optischen Anordnung (5, 7, 8) auf einer gemeinsamen Seite des Transporteurs (3) in vertikaler Richtung unterhalb der optischen Anordnung (5, 7, 8) und zwischen zwei Umlenkspiegeln (5.2) der Spiegelanordnung (5) und dem Fangspiegel (7) angeordnet ist.

2. Inspektionsvorrichtung nach Anspruch 1, **dadurch gekennzeichnet, dass** der optische Abstand zwischen der Inspektionsposition (1.1) und dem Objektiv (9.1) wenigstens um den Faktor 60 - 80 größer ist als die Brennweite des Objektivs (9.1).

3. Vorrichtung nach Anspruch 1 oder 2, **dadurch gekennzeichnet, dass** der optische Abstand größer als 2000 mm, beispielsweise 2500 mm ist.

4. Vorrichtung nach einem der vorhergehenden Ansprüche, **dadurch gekennzeichnet, dass** die Brennweite des Objektivs (9.1) unter 50 mm liegt, beispielsweise etwa 35 mm beträgt.

5. Vorrichtung nach einem der vorhergehenden Ansprüche, **dadurch gekennzeichnet, dass** die optische Anordnung im Strahlengang zwischen der Inspektionsposition und dem Kameraobjektiv (9.1) ausschließlich von den Lichtstrahl umlenkenden optischen Komponenten, beispielsweise von Umlenkspiegeln (5.1, 5.2, 7, 8) gebildet ist.

6. Vorrichtung nach einem der vorhergehenden Ansprüche, **dadurch gekennzeichnet, dass** die optische Anordnung (5, 7, 8) derart ausgebildet ist, dass die Lichtstrahlen jedes Bildes in horizontaler Richtung und in vertikaler Richtung umgelenkt werden.

7. Inspektionsvorrichtung nach einem der vorhergehenden Ansprüche, **dadurch gekennzeichnet, dass** die erste Spiegelanordnung (5) und die weitere Spiegelanordnung (7, 8) symmetrisch zu einer Mittelebene (M) ausgebildet und/oder angeordnet sind, die senkrecht zur Transportrichtung der Behälter (2) auf dem Transporteur (3) orientiert ist.

8. Inspektionsvorrichtung nach Anspruch 7, **dadurch gekennzeichnet, dass** die Aufnahme- oder Bildrichtungen mit der Mittelebene (M) jeweils denselben Winkel (α) einschließen.

9. Inspektionsvorrichtung nach Anspruch 7, **dadurch gekennzeichnet, dass** die Aufnahme- oder Bildrichtungen mit der Mittelebene (M) jeweils denselben Winkel (α) von 30° einschließen.

10. Inspektionsvorrichtung nach einem der vorhergehenden Ansprüche, **dadurch gekennzeichnet, dass** durch die optische Anordnung (5, 7, 8) ein gefalteter Strahlengang (6) für die mindestens zwei Bilder erreicht ist.

11. Inspektionsvorrichtung nach einem der vorhergehenden Ansprüche, **dadurch gekennzeichnet, dass** durch die optische Anordnung (5, 7, 8) ein sich schneidender Strahlengang (6) für die mindestens zwei Bilder erreicht ist.

## Claims

1. Inspection apparatus for an optical inspection of bottles or similar containers (2) made of glass or a translucent material, with at least one illumination device (4) arranged at a side of a transporter (3) for the containers (2), with an electronic camera (9) for imaging the container (2) which is positioned in front of the illumination unit (4) at an inspection position (1.1) and with an optical arrangement (5, 7, 8) in the light beam path between the container and a lens (9.1) of the camera (9) for producing at least two images of the respective container from at least two different exposure or image directions, wherein the optical distance between the container (2) located at the inspection position (1.1) and an lens (9.1) of the camera for each image is selected by taking account of the focal length of the lens (9.1) and the optical arrangement (5, 7, 8) in such a way that an essentially parallel arrangement of the light beams is achieved in the beam path between the container (2) and the lens (9.1) for each image, wherein the optical arrangement (5, 7, 8) comprises a first mirror arrangement (5) which deflects the two individual images from the different exposure and image directions into a common plane, wherein this common plane is an optical plane of a secondary mirror (7), common to both images, of a further mirror arrangement (7, 8) which is provided in the light beam path between the first mirror arrangement (5) and the camera lens (9.1), **characterised in that** this further mirror arrangement (7, 8) comprises a deflecting mirror (8), which is arranged above the secondary mirror (7) in such a way that both images from the regions (7.1, 7.2) of the secondary mirror (7), initially reflected upwards, are again reflected downwards at this deflecting mirror (8), and specifically to the camera (9), which is arranged with the optical arrangement (5, 7, 8) on a common side of the transporter (3) in a vertical direction beneath the optical arrangement (5, 7, 8) and between two deflecting mirrors (5.2) of the mirror arrangement (5) and the secondary mirror (7).

2. Inspection apparatus according to claim 1, **characterised in that** the optical distance
between the inspection position (1.1) and the lens (9.1) is greater by the factor 60-80 than the focal length of the lens (9.1).

3. Inspection apparatus according to claim 1 or 2, **characterised in that** the optical distance is greater 2000 mm, for example 2500 mm.

4. Inspection apparatus according to any one of the preceding claims, **characterised in that** the focal length of the lens (9.1) is less than 50 mm, for example some 35 mm.

5. Inspection apparatus according to any one of the preceding claims, **characterised in that** the optical arrangement in the light beam path between the inspection position and the camera lens (9.1) is formed exclusively from optical components deflecting the light beam, for example from deflecting mirrors (5.1, 5.2, 7, 8).

6. Inspection apparatus according to any one of the preceding claims, **characterised in that** the optical arrangement (5, 7, 8) is configured in such a way that the light beams of each image are deflected in a horizontal direction and in a vertical direction.

7. Inspection apparatus according to any one of the preceding claims, **characterised in that** the first mirror arrangement (5) and the further mirror arrangement (7, 8) are configured and/or arranged symmetrically to a middle plane (M), which is oriented perpendicular to the transport direction of the containers (2) on the transporter (3).

8. Inspection apparatus according to claim 7, **characterised in that** the exposure or image directions in each case enclose the same angle (α) with the middle plane (M).

9. Inspection apparatus according to claim 7, **characterised in that** the exposure or image directions in each case enclose the same angle (α) of 30° with the middle plane (M).

10. Inspection apparatus according to any one of the preceding claims, **characterised in that**, due to the optical arrangement (5, 7, 8), a folded light beam path (6) is attained for the at least two images.

11. Inspection apparatus according to any one of the preceding claims, **characterised in that**, due to the optical arrangement (5, 7, 8), an intersecting light beam path (6) is attained for the at least two images.

## Revendications

1. Dispositif d'inspection pour une inspection optique de bouteilles ou de contenants (2) similaires composés de verre ou d'un matériau translucide, avec au moins un dispositif d'éclairage (4) disposé sur un côté d'un transporteur (3) pour les contenants (2), avec une caméra électronique (9) destinée à représenter le contenant (2) positionné dans une position d'inspection (1.1) devant l'unité d'éclairage (4) ainsi qu'avec un système optique (5, 7, 8) dans le trajet de rayon entre le contenant et un objectif (9.1) de la caméra (9), destiné à produire au moins deux images du contenant concerné à partir d'au moins deux directions de prise de vue ou d'image différentes, dans lequel l'écart optique entre le contenant (2) situé dans la position d'inspection (1.1) et un objectif (9.1) de la caméra pour chaque image avec prise en compte de la distance focale de l'objectif (9.1) et le système optique (5, 7, 8) sont choisis de telle sorte que, pour chaque image dans le trajet de rayon entre le contenant (2) et l'objectif (9.1), une orientation sensiblement parallèle des rayons est obtenue, dans lequel le système optique (5, 7, 8) comporte un premier ensemble de miroirs (5), qui dévie les deux images individuelles provenant des directions de prise de vue et d'image différentes dans un plan commun, dans lequel ce plan commun est un plan optique d'un miroir secondaire (7), commun pour les deux images, d'un autre ensemble de miroirs (7, 8), qui est prévu dans le trajet de rayon entre le premier ensemble de miroirs (5) et l'objectif de caméra (9.1), **caractérisé en ce que** cet autre ensemble de miroirs (7, 8) comporte un miroir de déviation (8), qui est disposé au-dessus du miroir secondaire (7) de telle sorte que les deux images tout d'abord réfléchies verticalement vers le haut par les zones (7.1, 7.2) du miroir secondaire (7) sont à nouveau réfléchies vers le bas sur ce miroir de déviation (8), et ce sur la caméra (9) qui est disposée avec le système optique (5, 7, 8) sur un côté commun du transporteur (3) dans la direction verticale au-dessous du système optique (5, 7, 8) et entre deux miroirs de déviation (5.2) de l'ensemble de miroirs (5) et le miroir secondaire (7).

2. Dispositif d'inspection selon la revendication 1, **caractérisé en ce que** l'écart optique entre la position d'inspection (1.1) et l'objectif (9.1) est supérieur au moins du facteur 60-80 à la distance focale de l'objectif (9.1).

3. Dispositif selon la revendication 1 ou 2, **caractérisé en ce que** l'écart optique est supérieur à 2 000 mm, par exemple est de 2 500 mm.

4. Dispositif selon l'une quelconque des revendications précédentes, **caractérisé en ce que** la distance focale de l'objectif (9.1) se situe au-dessous de 50 mm, est par exemple d'approximativement 35 mm.

5. Dispositif selon l'une quelconque des revendications précédentes, **caractérisé en ce que** le système optique dans le trajet de rayon entre la position d'inspection et l'objectif de caméra (9.1) est formé exclusivement par des composants optiques déviant le rayon lumineux, par exemple par des miroirs de déviation (5.1, 5.2, 7, 8).

6. Dispositif selon l'une quelconque des revendications précédentes, **caractérisé en ce que** le système optique (5, 7, 8) est conçu de telle sorte que les rayons lumineux de chaque image sont déviés dans la direction horizontale et dans la direction verticale.

7. Dispositif d'inspection selon l'une quelconque des revendications précédentes, **caractérisé en ce que** le premier ensemble de miroirs (5) et l'autre ensemble de miroirs (7, 8) sont conçus et/ou agencés de manière symétrique par rapport à un plan médian (M), qui est orienté perpendiculairement à la direction de transport des contenants (2) sur le transporteur (3).

8. Dispositif d'inspection selon la revendication 7, **caractérisé en ce que** les directions de prise de vue ou d'image forment avec le plan médian (M) respectivement le même angle (α).

9. Dispositif d'inspection selon la revendication 7, **caractérisé en ce que** les directions de prise de vue ou d'image forment avec le plan médian (M) respectivement le même angle (α) de 30°.

10. Dispositif d'inspection selon l'une quelconque des revendications précédentes, **caractérisé en ce que** le système optique (5, 7, 8) permet d'obtenir un trajet de rayon (6) replié pour les au moins deux images.

11. Dispositif d'inspection selon l'une quelconque des revendications précédentes, **caractérisé en ce que** le système optique (5, 7, 8) permet d'obtenir un trajet de rayon (6) se croisant pour les au moins deux images.
